# EUROPEAN PATENT SPECIFICATION

(11) **EP 2 372 570 B1**
(45) Date of publication and mention of the grant of the patent: **19.06.2019**
(21) Application number: 10158497.7
(22) Date of filing: 30.03.2010
(51) Int. Cl.: G06F 16/00

(54) **Secure and flexible access to electronic documents in databases**
Sicherer und flexibler Zugang zu elektronischen Dokumenten in Datenbanken
Accès sécurisé et flexible aux documents électroniques dans des bases de données

(43) Date of publication of application: 05.10.2011
(73) Proprietor: Telefonaktiebolaget LM Ericsson (publ), 164 83 Stockholm (SE)
(72) Inventor: Jansen, Markus, 52074 Aachen (DE)
(74) Representative: Zacco Sweden AB

(56) References cited:
- EP-A2- 1 160 692
- EP-A2- 1 320 012
- EP-A2- 1 798 932
- WO-A1-02/059773
- WO-A2-2008/017056
- US-A1- 2002 069 192
- US-A1- 2006 059 253
- US-A1- 2007 156 842
- US-A1- 2007 250 912
- US-B1- 7 093 020

## Description

### Technical field

The invention relates to a method of accessing an electronic document located within a communication network including database nodes having access to electronic documents.

Moreover, the invention relates to a location broker node.

Furthermore, the invention relates to a control node.

The invention further relates to a database node.
The invention also relates to a management arrangement. Beyond this, the invention relates to a program element.

### Background

In large, global software development environments, both software and related documents are conveniently handled in distributed or replicated databases or sets of databases.

A number of both commercial and open source platforms exists for this purpose, with a tendency that distributed or replicated systems outperform centralized systems. Even centralized systems (example: Subversion) commonly rely on a copy-based mechanism to provide the data as close to the end user as possible.

The document US 2006/0059253 A1 describes a combination of an execution architecture, a development architecture and an operations architecture for a "netcentric" computing system.

The document EP 1 320 012 A2 describes a system and a method for providing distributed access control that restricts access to secured items including a central server having a server module and a plurality of local servers including a local module that provides access control.

The document WO 2008/017056 A2 furthermore describes a method and an apparatus for identifying a request to locate a user.

Examples for replicated or distributed systems are IBM ® Rational ® ClearCase ® (commercial, replication via IBM ® Rational ® ClearCase MultiSite ®), and Git and Mercurial (Open Source).

The document US 2007/0156842 A1 describes a distributed, web-services based storage system, wherein a keymap instance is configured to store a respective keymap entry for each object.

Commonly, direct access to the data stored is only possible via login to an environment hosting a database. In addition to that, especially the Open Source systems strive for enabling easy access and distribution through Web based interfaces. The built-in security focuses almost exclusively on write access (guaranteeing data integrity and user roles).

At least on the commercial side, tool authentication and authorization is increasingly implemented using Lightweight Directory Access Protocol (LDAP).

None of the tools known provide logging of read access.

With the large amounts of data (code and documents) used for instance in development organizations for telecommunications applications, replication is often experienced as an obstacle for efficient collaboration; a minimum delay of some minutes seems to be unavoidable. On the contrary, centralized systems can be experienced as delay lines for remote sites, or even show stoppers in case of failures of the central system.

The document US 2002/0069192 A1 and the related document WO 02/059773 A1 describe a computer-implemented system and methods for deploying a distributed client-server system incorporating an incremental process for executing an "application servo" in a client device.

Another shortcoming is the fact that software deliveries to an internal or external customer usually involve intermediate copies into a secure area, or handling via special tools, often accompanied by a loss of metadata.

Any authenticated/authorized read access at one of the distributed or replicated databases requires complete authentication and authorization facilities in this environment, with the requesting user being registered.

The document US 7 093 020 B1 describes methods and systems, in which a user is logged into a main system and can log-out of all the external systems by logging out of the main system.

The document US 2007/0250912 A1 describes a system that is directed towards employing transferable entitlements using entitlement management messages (EMMs) for enabling a purchase of content using a mobile device, wherein upon authorization, an EMM with an access key to the content is sent to another network device.

When indexing documents and source code data in a global product/document database, it is not guaranteed that a given indexed version is actually replicated to the replica or distribution copy which is addressed for fetching the data. This shortcoming increases with large files (long replication time) or a flexible company setup (non-predictable replication with change/lifecycle management implemented). At the start of its life cycle, a document version exists only in the originating replica. After some (predictable but not guaranteed) time span, it is replicated to a number of locations. At the end of its lifetime, it should reside only at some archive location.

To guarantee data access, any generic access mechanism to a set ("family") of distributed/replicated databases thus requires access at all sites. In addition to local login accounts, local firewalls with individual subscriber lists may be used to protect company assets. To grant access to a document, generic access solutions need either to cope with all local fortifications, or bypass some of them. However, in most cases, this will lead to a lower overall security and/or an increased maintenance.

Concluding, the described existing solutions suffer at least from the following shortcomings:
In large deployments of distributed (source code) databases with relatively slow replication and/or a lifecycle dependant replication model, these databases are normally not eligible for acting as a data feed towards a company-wide product archive. One of the reasons for this mismatch is the partially nondeterministic behavior of the set of locations where a wanted document (or set of documents) is stored: at the start of the lifecycle it can be retrieved solely from the originating replica, after a while (quite deterministic but not guaranteed time span) it can be found in a couple of locations, and at the end of the lifecycle it may be stored in just one archive locations. As a result, documents are usually handled using other tools with centralized databases, with negative impacts on sites located at large distances (network costs, download times), and an overall negative impact on global collaboration and automated builds.
Additionally, in the case of local sites being protected by firewalls with individual subscriber lists, user access is strictly limited to the sites they are registered with. Any generic/global access tool would need to either cope with or bypass the existing firewalls, potentially causing reduced security and/or increased maintenance costs.

### Summary

It is an object of the invention to enable a secure and flexible access to electronic documents stored in even a complex system of databases.

In order to achieve the object defined above, a method of accessing an electronic document located within a communication network including database nodes having access to electronic documents, a location broker node, a control node, a database node, a management arrangement, and a program element according to the independent claims are provided.

According to an exemplary embodiment of the invention, a method of accessing an electronic document located within a communication network including database nodes having access to electronic documents is provided. The method comprises receiving a query from a user via the communication network, wherein the query indicates the electronic document to be accessed. The method further comprises determining, based on at least one predefined determination criterion, which of the database nodes potentially have access to the electronic document indicated in the query. Moreover, the method comprises querying the determined database nodes for determining a database node having verified access to the electronic document.

According to another exemplary embodiment of the invention, a location broker node for brokering access to an electronic document located within a communication network including database nodes having access to electronic documents is provided. The location broker node comprises a receiving unit adapted for receiving a query via the communication network, wherein the query indicates the electronic document to be accessed. The location broker node further comprises a determining unit adapted for determining, based on at least one predefined determination criterion, which of the database nodes potentially have access to the electronic document indicated in the query. Moreover, the location broker node comprises a sending unit adapted for sending a reply to the query, wherein the reply indicates determined database nodes which potentially have access to the electronic document. The location broker node further comprises a communication unit adapted for communicating towards at least one of the database nodes for receiving information to be used for the determining.

According to yet another example of the invention, a control node for controlling access to an electronic document located within a communication network including database nodes having access to electronic documents is provided. The control node comprises a communication unit adapted for receiving a query from a user via the communication network, wherein the query indicates the electronic document to be accessed. The control node further comprises a computation unit adapted for verifying user access rights, being communicatively coupled to a determining unit (which may or may not be part of the control node) and being adapted for receiving from the determining unit information indicating which of the database nodes potentially have access to the electronic document indicated in the query. Moreover, the control node comprises a query unit adapted for querying the determined database nodes for determining a database node having verified access to the electronic document.

According to yet another example of the invention, a database node having access to electronic documents within a communication network is provided. The database node comprises a query unit adapted for querying a set of assigned databases being dynamically assigned to the database node. The database node further comprises a sending unit adapted for sending data indicative of a result of the querying to at least one connected location broker node, and a receiving unit adapted for receiving a query from a control node to check whether one of the assigned databases contains an electronic document requested by a user. Moreover, the database node comprises a replying unit adapted for replying to the query from the control node indicating whether the electronic document exists and is accessible via a respective database, and a receiving unit adapted for receiving a document locator indicating the electronic document. A transmission unit is adapted for controlling transmission of the electronic document from the respective database to the user.

According to yet another example of the invention, a management arrangement for managing access to an electronic document located within a communication network including database nodes having access to electronic documents is provided. The management arrangement comprises one or more location broker nodes having the above-mentioned features for brokering access to the electronic document. The management arrangement further comprises one or more control nodes having the above-mentioned features for controlling access to the electronic document.

According to still another example of the invention, a program element (for instance a software routine, in source code or in executable code) is provided, which, when being executed by one or more processors (such as a microprocessor), is adapted to control or carry out a method having the above mentioned features.

According to yet another example of the invention, a computer-readable medium (for instance a CD, a DVD, a USB stick, a floppy disk or a harddisk) is provided, in which a computer program (for instance the above program element) is stored which, when being executed by one or more processors (such as a microprocessor), is adapted to control or carry out a method having the above mentioned features.

Data processing which may be performed according to embodiments of the invention can be realized by a computer program, that is to say by software, or by using one or more special electronic optimization circuits, that is in hardware, or in hybrid form, that is by using software components and hardware components.

In the context of this description, the term "electronic document" may particularly denote a single file, a directory of files, or a hierarchic collection of directories and/or files. An electronic document may be in source code or in executable code. It may denote any block or collection of data in electronic form, particularly in machine-readable form.

The term "determination criterion" may particularly denote one or a combination of multiple predefined criteria to be used for making a decision whether it is considered sufficiently likely that a specific database can deliver a certain electronic document desired by a user, or not. In an embodiment, a determination criterion may be defined depending on or based on a replication rate of databases storing corresponding electronic documents. Examples for the at least one predefined evaluation criterion are an identity of the querying user, a role of the querying user (which may be connected to corresponding access rights), a computer network address of the querying user (which may indicate which database node/s is/are responsible for serving the user), an age of the electronic document to be located (which may be an indicator for the likelihood that the electronic document is still or only accessible via its original location), an indication of in which time frame a database is expected to be synchronized, a location where the electronic document had been originally stored (which may be considered as a reasonable location where the document can still or only be accessed), roles specified for at least a part of the database nodes (for instance, a database node may be particularly adapted for managing access to certain types of documents), availability information indicative of an availability of a respective one of the database nodes (for instance, database nodes being presently busy with certain tasks may be considered as an inappropriate source for accessing the electronic document), task load information indicative of a present task load to be handled by a respective one of the database nodes (the smaller the present task, the more appropriate may be the corresponding database node for quickly accessing the electronic document), and a response time of a respective one of the database nodes in response to a message sent to the respective one of the database nodes (for instance, it is possible to consider only database nodes as proper access gates for an electronic document which database nodes reply to a "hello" message of another node within a predefined reply time interval).

The term "database nodes which potentially have access to the electronic document" may particularly denote a set of one or more database nodes which shows/show a sufficient agreement or matching with at least a part of the one or more determination criteria. Hence, such database nodes will be considered as reasoned candidates for database nodes which could have access to the desired electronic documents.

The term "database node having verified access to the electronic document" may particularly denote one or more database nodes in fact having access to the electronic document desired by the user, for instance since this database node has access to an assigned database which does store the desired electronic document.

The term "databases dynamically assigned to the database node" may particularly denote that the set of attached databases is not a fixed one, but might be altered without interrupting ongoing services.

The term "node" may particularly denote any communication entity such as a processor, a computer (for instance a client computer, a server computer), a mobile device (for instance a laptop, a mobile phone, a personal digital assistant) which can be operated within a communication network (such as the public Internet, an intranet, a telecommunication network, etc., or a combination of such networks). A node may have processing capability (and optionally storage capability) for fulfilling assigned tasks in the framework of a document management system.

Examples of the invention provide a method, data processing system and computer program product for a both flexible and secure global access to a set of databases, particularly appropriate for the management of access to replicated or distributed databases. Access to an electronic document may be enabled independently of replication or distribution delays or errors or the like. At the same time, such a system may allow for a fully redundant setup and a decoupling of data storage and user data management (for instance authentication/authorization/logging functionality). This can be accomplished by a procedure during which it is first determined on the basis of specific determination criteria which database nodes are promising candidates for obtaining a desired electronic document. Second, it may be checked by accessing these candidates which of these candidates is in fact able to deliver the electronic document. Such a document management architecture may be reliable, fast, and safe.

Next, further examples of the method will be explained. However, these examples also apply to the location broker node, the control node, the database node, the management arrangement, the program element, and the computer-readable medium.

After having queried the determined database nodes for determining a database node having verified access to the electronic document, the method may comprise sending access information indicative of this verified database node to the user node.

According to an example, one or more distributed databases may be assigned to each of the database nodes. Such an assignment may define which database node is responsible for taking care of which database in terms of organizing access to electronic documents stored in the database. The distributed databases may store the electronic documents. The term "distributed databases" may particularly denote a system of databases split into various databases which may be logically separated or even spatially remote from one another or being managed independently from one another. More specifically, a distributed database can particularly be a replicated database (with redundant and/or updated storage of documents). According to such an architecture, database nodes (having at least processing capability, optionally also storage capabilities) and databases (having at least storage capabilities, optionally also processing capabilities) may be arranged in an ordered configuration in which each database node may have assigned one or more databases for managing them. Thus, a hierarchic system with strictly separated functionality may be provided which allows the database node to function as contact entities for location broker nodes or control nodes for quickly deriving information indicative of a possible location of a database where a specific electronic document might be available.

The above mentioned determining procedure may comprise generating a priority list ordering the determined database nodes in accordance with a priority of accessing the electronic documents via a respective one of the determined database nodes. The querying may then be performed in an order in accordance with the order of the determined database nodes in the priority list. Thus, the one or more determination criteria may result in a number of database nodes which could, with a reasonable probability, have access to the electronic document, since they meet one or more of such determination criteria to a sufficient degree. However, the determining procedure may result in different probabilities for the potential candidates that they actually can access the requested electronic document. Thus, a (for instance qualitative or quantitative) priority value may be assigned to the database nodes having potential access to the desired electronic document. They can be ordered according to a priority criterion which may for instance corresponds to a probability that the electronic document could in fact be available via this database node. When, in a subsequent procedure, the candidates among the database nodes which potentially have the electronic document available are queried, a particularly promising strategy is to query them in a chronology which corresponds to this priority list. In other words, database nodes with a higher priority are queried before database nodes with a lower priority. This allows to derive the electronic document with low computational burden, a small amount of traffic over the communication network, and in a short time.

In an example, the method may comprise checking an authentication and/or an authorization of the user before querying the database nodes. In this context, the term "authentication" may particularly denote checking an identity of a user requesting an electronic document via a client node. Knowledge of the identity of the user may then allow a control node to decide whether such a user can be considered as generally allowed to access electronic documents, for instance since this user is member of a corporate or social network or is mentioned on a list of users. If the authentication of the user fails, the request for accessing the electronic document may be refused. Furthermore, the term "authorization" may particularly denote a process for determining whether a specific user is allowed to get access to a special electronic document. This may depend on the role of the user. Depending on this role, a user may have access to all or to only a part of electronic documents, may have read and/or write authorization, etc. For instance, in a corporate or social network such as an enterprise intranet, specific electronic documents may only be accessible for a part of the members of this network. If the described authentication and/or authorization procedure is performed before querying database nodes for potentially providing a specific electronic document, not-allowable access trials can be identified at an early stage, thereby limiting the traffic over the communication network to the absolutely necessary amount.

In an example, the method may comprise receiving, as a result of the querying, a document locator comprising information required for obtaining the electronic document from the database node which has verified access to the electronic document. Such a document locator may be the entrance card to the desired electronic document. It may include the information at which location the electronic document is accessible for the user. In an example, the document locator may comprise all necessary information for getting access to the document. It may for instance be a data packet including an address where the electronic document may be downloaded, and optionally further information, The document locator may be transmitted to the user node so that the user can then, on his own, access the electronic document.

Still referring to the previously described example, the document locator may be a one-time usable document locator. Such a one-time usable document locator may have the property to allow only one, i.e. exactly one, access to the electronic document by the user. After having accessed the document once, the one-time usable document locator is no more valid for accessing the document again. Therefore, by providing such a one-time usable document locator, a high degree of data security can be guaranteed. In an example, the user node can be provided with all necessary information for actually getting access to the electronic document.

However, such a one-time usable document locator is one example of an implementable document locator. In another example, the document locator may allow the user to access the electronic document for a predefined number (one or a plurality) of times. Additionally or alternatively to a document locator which can only be used one or more times (and is thereafter no longer valid), it is possible that a document locator has other limitations regarding its usability for accessing the electronic document. For instance, there may be a time limitation (for instance a time period after generation of the document locator, or a fixed point of time) until which the document locator has to be used for accessing the corresponding electronic document. After expiry of such a time limitation, the document locator can no longer be used for accessing the electronic document. Such a time limitation (for instance access to the electronic document only during the existence of a valid subscription of the user, or a fixed time limit such as "one month") may be indicated in the document locator, preferably in an encrypted way.

Preferably, at least a part of the document locator may be encrypted. For instance, a part of the document locator may be encrypted, and another part of the document locator may be in plaintext. For example, an identifier of the electronic document may be in plaintext, whereas a part of the document locator including confidential information may be encrypted. Alternatively or additionally, the document locator can also contain a cryptographic checksum or another suitable cryptographic signature. This guarantees for a high degree of data safety. However, the document locator safety can be adapted to the actual security level of the document requested, that is a document classified as public may not require excessive security.

The method may further comprise, upon receiving the above-mentioned document locator, redirecting the user node query from the control node to the database node which has verified access to the electronic document. For instance, a control node having accessed a location broker node for obtaining a list of potential database nodes which could have access to the electronic documents may then determine a database node which has verified actual access to the electronic document. After this, the task of the control node may be completed. Therefore, the subsequent communication for accessing the electronic document by the user can be performed directly between the user node who has requested the electronic document and the competent database node. This can be performed by simply forwarding the document locator from the control node to the user node. The user node can then, on its own and under user-defined conditions, access the electronic document. This keeps the amount of traffic small and allows the user to flexibly decide for instance when such an access to the electronic document based on the document locator is performed.

The query from the user may comprise also metadata related to the electronic document to be accessed. Metadata can be denoted as "data about data". Thus, metadata may further describe the electronic document (the content of which, in turn, can be denoted as use data or payload), so that the metadata may serve as an informative label which may simplify the procedure of determining where the electronic document could be found. Hence, by adding metadata to the request, the user can include a requested data format, a generic result file name scheme, preferred target database nodes or database instances for the data access, or the like which may simplify accessibility of the data and/or compliance of the provided data with the requirements of the user. Thus, the provision of metadata characterizing the electronic document to be accessed may allow for a more precise search in the communication network for a source of the electronic document desired by the user.

Next, further examples of the management arrangement will be explained. However, these examples also apply to the method, the location broker node, the control node, the database node, the program element, and the computer-readable medium.

In one example, there may be a strict coupling between a control node and one or more assigned location broker nodes. In other words, one control node will always use one or more assigned location broker nodes for querying database nodes in this example. However, in an alternative example, it is also possible that there is a selective and flexible coupling between control nodes and location broker nodes, so that for each access to an electronic document, a control node may decide (for instance freely or based on one or more decision criteria) which one or more of the locator broker nodes shall be used for the subsequent querying. In still a further example there may be a default assignment between a control node and one or more location broker nodes, which however can be broken through if there is a specific need of a control node to use one or more other location broker nodes for a certain task.

In the management arrangement, at least one of the at least one location broker nodes and at least one of the at least one control nodes may be integrally formed as a common node. Thus, a very compact architecture may be achieved. Alternatively, location broker node and control node may not only be functionally, but also structurally (and therefore spatially) separate.

The management arrangement may comprise at least one database node having the above mentioned features. Thus, three hierarchical levels may be interconnected to one another.

In the management arrangement, at least one database node may be adapted for transmitting a document locator to the control node, the one-time usable document locator being indicative of a location at which the electronic document is accessible for the user. However, it is not necessarily the database node which generates the one-time usable document locator, as there are also other ways feasible (examples: one-time usable document locator generated centrally and communicated with the query, or generated centrally and validated by a ticketing system, in which the database node would simply need to indicate that the wanted document is accessible). With the one-time usable document locator generated by the database node (using for example a private random key), however, there is some guarantee that only this server is able to interpret the one-time usable document locator. In an example, a one-time usable document locator needs to be restricted to a distinct database node.

The aspects defined above and further aspects of the invention are apparent from the examples of embodiment to be described hereinafter and are explained with reference to these examples of embodiment.

### Brief description of the drawings

Embodiments of the invention will be described in more detail hereinafter with reference to examples but to which the scope is not limited.
Fig. 1 to Fig. 3 illustrate communication networks comprising management arrangements according to exemplary embodiments of the invention.
Fig. 4 is a flow chart illustrating procedures of a method according to an exemplary embodiment of the invention which can be executed by the management arrangements of Fig. 1 to Fig. 3.
Fig. 5 is a flow chart illustrating procedures of a method according to an exemplary embodiment of the invention.
Fig. 6 illustrates a location broker node for brokering access to an electronic document located within a communication network according to an exemplary embodiment of the invention.
Fig. 7 illustrates a control node for controlling access to an electronic document located within a communication network according to an exemplary embodiment of the invention.
Fig. 8 illustrates a database node having access to electronic documents within a communication network according to an exemplary embodiment of the invention.

### Detailed description

The illustration in the drawings is schematically. In different drawings, similar or identical elements are provided with the same reference signs.

Logging functionality is not shown in the drawings for clarity reasons.

Exemplary embodiments of the invention ensure a safe, fast and reliable access to electronic documents. Without wishing to be bound to a specific theory, it is presently believed that such embodiments at the same time implement a security level which is considered substantially higher and more flexible than any of the conventional solutions.

Another advantage of an exemplary embodiment of the invention is that it reaps the benefits of the (in some cases costly) replication in a way that electronic documents are usually served to a user or client using the "nearest" server, resulting in local area network accesses where feasible. Within build environments, copying data can be completely avoided.

In an embodiment, electronic document access - for instance via company-wide product registries or directly accessing the archive (one archive from a user perspective) - may be accomplished via a hierarchical three-stage network of servers, wherein the topmost layer (which may also be denoted as control node(s) or as search/authentication/authorization server(s)) handles user access (including authentication and authorization), the bottom layer (which may also be denoted as database node(s) or secure data server(s)) the access to the local database(s) potentially including generation of a one-time safe Universal Resource Locator (also denoted as document locator) for document access, and the middle layer (which may also be denoted as location broker server(s) or location broker node(s)) serves as a location broker between the other layers.

Upon successful authentication, authorization, and document accessibility, the top layer server redirects a user document request to an encrypted one-time Universal Resource Locator addressing the most appropriate bottom layer server, which then delivers the wanted document to the user node. The fetch Universal Resource Locator is valid only for the user node issuing the original electronic document access request, and for a one-time access starting within a limited time span.

With a possible *n : m :* o *: p* server setup (with n search / authentication / authorization servers, m location broker servers, o secure data servers, and *p* target database servers or databases), the system can be deployed without a single point of failure, enabling authentication, authorization and logging on n "strategic" sites, implementing proper access for o database sites as well as the company as a whole, especially user nodes not residing directly on a database site.

Exemplary numbers for the above *n : m :* o *: p* setup are 3 : 3 : 50 : 20000, with a secure data server accessing for instance up to 1000 target database servers or more, with each target database server potentially scaling up to at least 1000 or more electronic documents and 100000 or more single files.

Embodiments of the invention are not limited to the precise arrangements and instrumentalities described herein, but should be understood as a general system to for supporting distributed or replicated document databases.

Also, the functional decomposition on the "n : m times" server side into search/authentication/authorization servers and location broker servers should be understood as an example.

Generally, the location broker server functions as fast lookup cache with computational capabilities, as querying the secure data servers directly in a non-optimized order as a first step would generate much more network traffic, and the alternative to query the target databases directly may be even slower.

In the presence of local firewalls with individual subscriber lists, these firewalls need to be bypassed by any solution granting a generic access irrespective of the fact to which locations the wanted data are actually replicated to (or coped with, potentially affecting security).

The concept presented by examples of the invention allows such a bypass while providing both security and access flexibility.

From a security perspective, one example of the invention is the fact that security negotiations may be performed using a dedicated and protected server network, and that the secure one-time Universal Resource Locator used for the data fetch is generated at the server delivering the data, with only this server in possession of the (random) key used.

Examples of the invention also enable a security concept where the intra-server communication can be set up in a way that upon partial intrusion in the system, this part can be simply switched off, without any risk for the communication between the other servers (separate keys per connection, each server only knows its relevant key subset).

To further reduce vulnerability, it is possible that a part or all server connections are guarded, for instance at least by using SSL encryption.

Although illustrated embodiments show examples of data read access, the system described herein can be extended to enable a database instance independent flexible create, read, update and delete (CRUD) access to replicated or distributed database systems. In such an example, additional selection criteria such as replica local masterships can be established for a transparent access of the optimal data server.

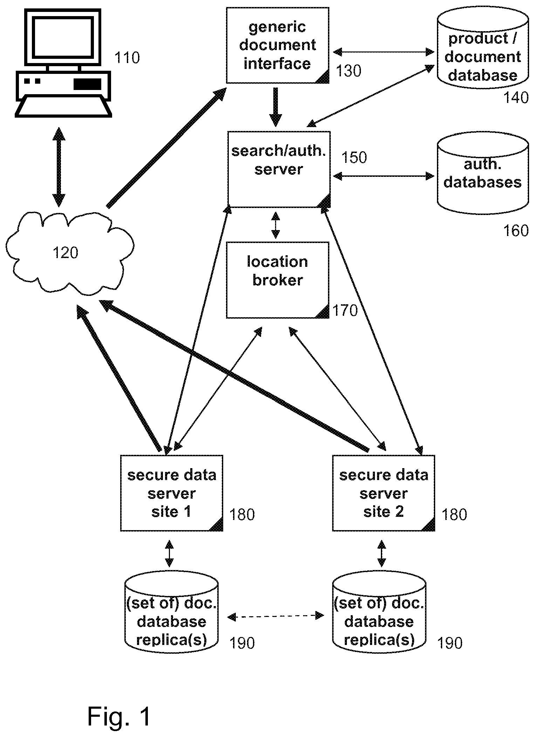

**Fig. 1** is an illustration of a data processing system for global data access to one or more user computers 110 over a computer communication network 120 according to an example of the invention.

The system can include one or more generic data interfaces 130 connected to one or more information management databases 140.

The system shown in Fig. 1 comprises one or more search/authentication/authorization servers 150 (also denoted as control nodes). In the figures, the expression "auth*" is used as an abbreviation for "authentication and authorization". The system shown in Fig. 1 furthermore comprises one or more location broker servers 170 (also denoted as location broker nodes), and one or more secure data servers 180 (also denoted as database nodes), the latter ones providing access to one or more database replicas 190 (also denoted as databases), usually located on the same site, storing the data to be accessed.

Fig. 1 illustrates that a direct communication between search/authentication/authorization server 150 and any of the secure data servers 180 is possible.

In the figures, the term "doc. database" is used as abbreviation for document database, with electronic documents being understood as generally as possible, that is being single files or a hierarchical collection of directories and files (also called containers, compound files, or directory trees), or (sets of) versions of such items. For transmission and/or storage purposes, single or compound files can be compressed.

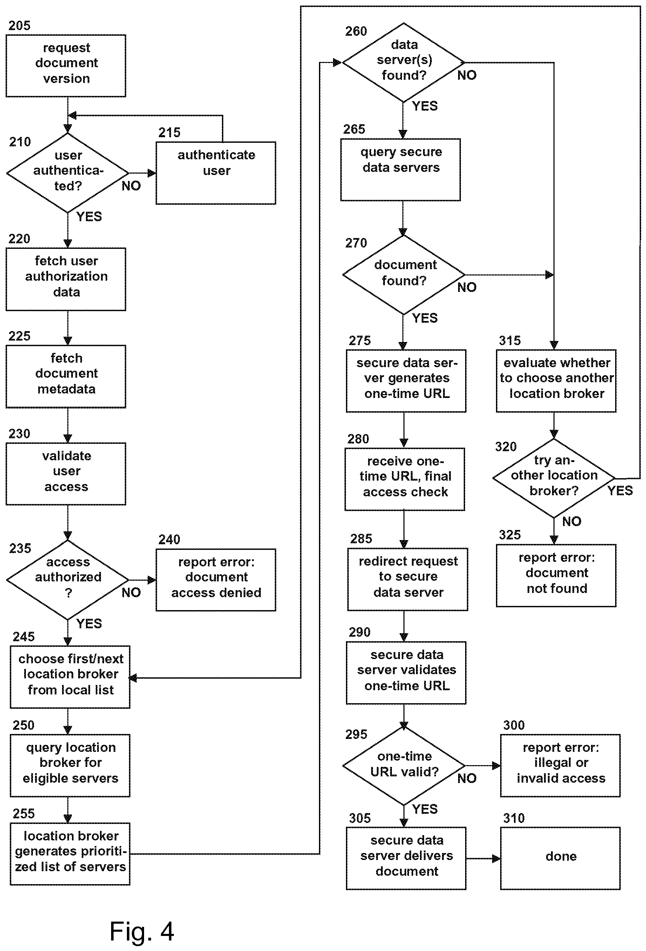

**Fig. 4** is a flow chart illustrating a process for fetching data according to an example of the invention which can be understood in conjunction with Fig. 1. The secure data servers 180 may regularly update the connected information broker server(s) 170 with details about the data they can reach, their server roles, security/access information, preferred user node IP ranges and other setup information necessary for the location broker server(s) 170. Actual information about the server health and load may also be exported on a regular basis.

In accordance with an example of the present invention, an information management database 140 (also denoted as product/document database) can denote a system (or a family) of potentially replicated or distributed databases 190 as actual data storage. The search/authorization/authentication server 150 functions as the interface to the database system.

With this access interface delegation activated, accessing the data via a generic document interface 130 (block 205) will redirect the data access request to the search/authorization/authentication server 150.

The search/authorization/authentication server 150 can utilize external authentication and authorization databases 160 as well as the information management database 140 for authentication of the user (blocks 210, 215, and 220), verification of the data existence (block 225), and user access authorization (block 230).

Upon successful request validation and user authorization (block 235), the search/authorization/authentication server 150 can select its related (or the default one in case of multiple ones) location broker server 170 (block 245), and query it (block 250) for a prioritized list of secure data servers 180 which are known to have access to a database 190 which might potentially have the requested data stored.

For simplicity, not all possible authorization and data integrity checks occurring after block 235 are shown.

The location broker server 170 can generate a prioritized list (block 255) of secure data servers 180 based on various facts, such as the IP (Internet Protocol) address of the requesting user node 110, the age of the data being requested, roles specified for one or more of the secure data server 180, and the availability and load/response time of the systems hosting the secure data servers 180 and/or the database servers 190.

Considering actual load values of the systems hosting the secure data servers 180 and/or the databases 190, which may be known via regular updates independently of access requests described here, the location broker server 170 can implement an effective and fully transparent load balancing functionality.

In the described example, the prioritized list of secure data servers 180 can thus contain one, a part or all (and additionally or alternatively other) of the following:
- Active secure data servers 180 (secure data servers 180 which have sent their regular "hello" notification to the location broker server 170 - list entries can also contain server load specifications)
- Original secure data servers 180 (those accessing the target database instance/replica 190 where the data was fed into the system - usually one single secure data server 180)
- IP Address Matches (denoting secure data servers 180 which have declared their responsibility for the IP address range the IP address of the user node 110 belongs to - usually one single secure data server 180)

- Default secure data servers 180 (those having declared to serve document company-wide for user nodes not matching any IP address range - this can be multiple secure data servers 180)
- Hardened archive servers (see explanation below)
- Fallback secure data servers 180 (those secure data servers 180 being marked as active but not as original, IP address matching, or default) - this set is redundant and can be calculated as all active secure data servers 180 not qualifying for any of the original/IP address match/default criteria.

The location broker server 170 can also supply additional/updated access related data supplementing the access data potentially provided by the information management database 140.

Having received a prioritized list of secure data servers 180 and - if present - having successfully checked additional/updated access data against the user's authorization profile, the search/authentication/authorization server 150 can query the secure data servers 180 on the list (block 265), for instance sequentially or in some parallelized manner.

The query sequence and the priority can be influenced by the known age of the target data in relation to the expected target database server 190 synchronization time: if the expected synchronization time is not elapsed yet, the originating replica (that is, the one where the target data was fed into the system) can be considered to be most probably the only one being able to serve the data.

In an example, the following priority sequences are regarded useful
a) For example in a scenario, in which synchronization is expected to have happened (for example, if a time since generation of the electronic document is larger than a predefined threshold value), the following priority sequence may be applied:
   1- IP address match
   2- Default secure data servers 180
   3- Origin secure data servers 180
   4- Fallback secure data servers 180
b) For example in a scenario, in which synchronization is not expected to have happened yet (for example, if a time since generation of the electronic document does not exceed a predefined threshold value), the following priority sequence may be applied:
   1- Origin secure data servers 180
   2- IP address match
   3- Default secure data servers 180
   4- Fallback secure data servers 180

In case multiple secure data servers 180 qualify for the same priority, the actual system load of those secure data servers 180 can be used for final priorization.

The expected target database 190 synchronization time can be provided as a general estimate, or alternatively/additionally specified per replicated or distributed target database 190.

The query sequence or priority can be influenced by the known age of the target data. Particularly if the normal target database 190 synchronization time is not elapsed yet, the originating replica (that is, the one where the target data was fed into the system) can be considered most probably the only one being able to serve the data.

In case a secure data server 180 finds the requested data (block 270), the secure data server 180 can generate a one-time Universal Resource Locator (block 275) and send it to the requesting search/authentication/authorization server 150. Optionally, the secure data server 180 can also apply a number of additional access checks.

The one-time Universal Resource Locator can be RESTful, that is it may contain all information necessary for the data fetch, preferably in an encrypted form, and protected by a reasonably safe checksum. Alternatively or additionally, the Universal Resource Locator can contain a Universally Unique Identifier for re-identification at fetch validation time (block 295).

In any case, encryption keys can remain strictly local to a secure data server 180 instance, and can thus be used in the context of this secure data server 180 only.

The one-time Universal Resource Locator can also contain an unencrypted (but for instance checksum protected) part, for instance as its tail, to suggest an appropriate download filename. This measurement can be accompanied by user node (for example, web browser) specific data.

Upon reception of the one-time Universal Resource Locator and the optional validation of additional security information (block 280), the search/authentication/authorization server 150 can redirect the original data request from the user node 110 to the secure data server 180 (block 285).

After the redirection, the user node 110 (which may also be denoted as client) can request the data from the secure data server 180, using the one-time Universal Resource Locator generated in block 275.

The secure data server 180 can validate the Universal Resource Locator (block 290) against a number of security measurements, such as a checksum contained in the Universal Resource Locator, the timestamp validity, and/or the IP address of the requesting user node 110.

Upon successful validation (block 295) of the Universal Resource Locator, the secure data server 180 can deliver the requested electronic document (block 305) from the target database 190 to the requesting user node 110.

In case of multiple location broker servers 170, the search/authentication/authorization server 150 can try to query other location broker servers 170 than its default one. This can be in one example if at least one of the following conditions is met (additional or alternative conditions might be defined depending for instance on the actual network topology and infrastructure):
a) The selected location broker server 170 does not answer or is overloaded
b) The selected location broker server 170 returns an empty prioritized list of secure data servers 180
c) The selected location broker server 170 returns a list not containing at least one secure data server 180 marked as origin and/or default servers
d) After querying all secure data servers 180 known so far (not including the origin server and if appropriate a hardened server yet), the wanted target data has not been found

Blocks 315, 320, 325 describe procedures to be executed upon evaluating which location broker server 170 is chosen for a subsequent communication, e.g. if the document was not found.

The decision whether a search can be declared unsuccessful may depend on the fact whether all relevant (or alternatively, simply all existing) secure data servers 180 have been queried successfully without being able to access the wanted electronic document in the respective target database 190. Relevant servers in the scope of this decision are origin servers and (hardened) archive servers (if implemented for the respective set of replicated target databases 190).

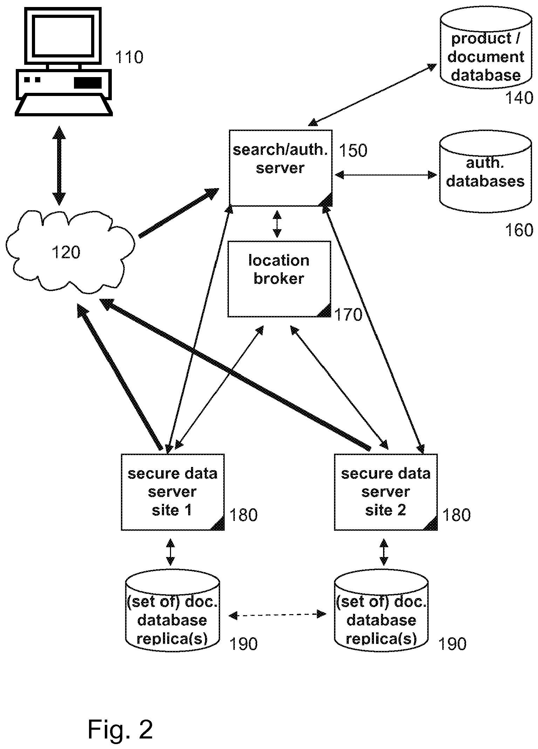

**Fig. 2** illustrates a system allowing for a direct access of a user node 110 to a search/authentication/authorization server 150 as archive interface according to an example of the invention.

The process is basically the same as the one described referring to Fig. 1, except that the direct access enables passing of additional parameters which are specific to the archives accessed and/or to the process of an example of the invention.

Examples of such parameters include the requested data format, a generic result file name scheme, and preferred target database instances for the data access.

In case the generic document interface 130 passes such additional parameters to the archive interface (search/authentication/authorization server 150), the above mentioned extended access possibilities also extend to the generic data access.

While Fig. 1 illustrates an example with access via a generic document access interface, Fig. 2 illustrates an example with direct access to the archive, enabling archive specific features which are not available via the generic document access interface.

Fig. 2 illustrates that a direct communication between search/authentication/authorization server 150 and any of the secure data servers 180 is possible.

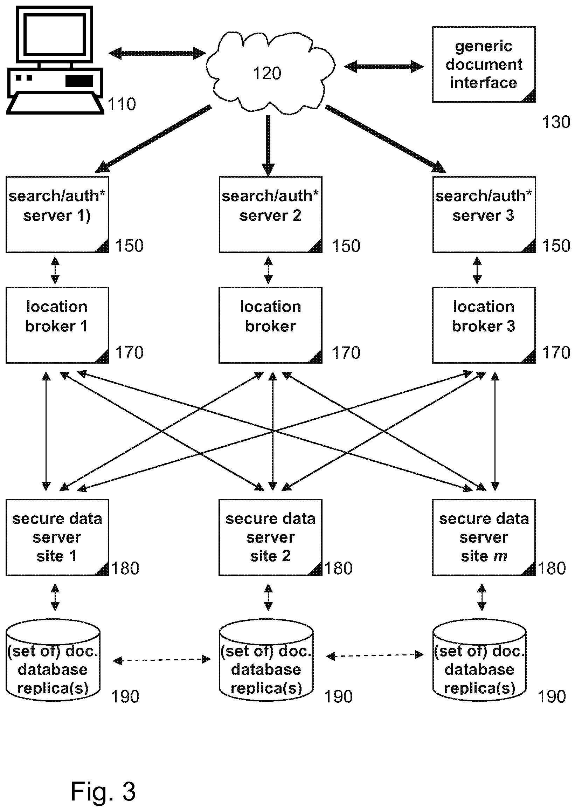

**Fig. 3** illustrates an example of the invention where multiple sets of search/authentication/authorization servers 150 and location broker servers 170 are deployed. Fig. 3 shows an example with multiple search/authentication/authorization servers 150 and location broker servers 170, providing a fully redundant setup.

Although not shown in Fig. 3, a direct communication between any of the search/authentication/authorization servers 150 and any of the secure data servers 180 is possible.

Although Fig. 3 suggests such a setup, it is not necessary that all search/authentication/authorization servers 150 are connected to all location broker servers 170, and not all location brokers 170 are connected to all secure data servers 180. Especially for security and/or export restriction reasons, server subsets may be unequal or even disjoint. In this case, such restrictions need to be respected by the implementation on search/authentication/authorization server 150 level. In many of such cases, it may be appropriate to construct just another completely disjoint server network.

Another example of the invention relates to a setup where a special client (possibly CLI (Command Line Interface) or API (Application Programming Interface) based or integrated in a development environment) signals the server that it has direct access to the target data in a given development environment.

In this case, data provisioning can be established without copying the actual target data, but providing a suitable reference to the target data (for example, a symbolic link pointing to a software repository file system).

For data not (or not yet) locally available, the normal fetch process may apply.

Next, communication between secure data servers 180 and location broker servers 170 will be explained in more detail.

In examples of the invention, all servers know the set of servers/clients they are supposed to communicate with.

The secure data servers 180 can send a regular (for example, every minute) "hello" message to its connected location broker servers 170, thereby qualifying as active servers and updating their load status. Furthermore, the secure data servers 180 can autonomously read their configuration data, and inspect the set of target database replicas 190 they are flexibly assigned to on a number on occasions. For instance, this can be performed upon:
- server startup
- request by the location broker server 170 (for example, if such a server is (re)started)
- user request (for example, by receiving an appropriate signal issued by an administrator)
- regularly (for example, daily).

Refreshment operations may be carried out in a way that they do not disturb ordinary server operations, that is, in an asynchronous way.

In the following, hardened archive servers will be explained in more detail.

For the sake of proper data security, a set of target database replicas 190 can be specially fortified against unauthorized/unwanted data deletion.

In case such a feature is implemented, it may affect the search algorithm only in a way that having queried both the origin database replica (in case it still exists) and a hardened archive database replica (in case it exists) successfully without finding the wanted data, the search/authentication/authorization servers 150 can immediately stop any further secure data server queries, and declare the search as unsuccessful.

In an example of the invention, a large, replicated environment of IBM ® Rational ® ClearCase ® databases may be connected to a company-wide global product and document information database, enabling transparent data access with the following characteristics:
- Irrespective of the set of database instances/sites where the requested data are (already) replicated to
- Seamlessly integrated into a global information management database
- With the life cycle position of the data requested only considered as specified by the global information management database
- Irrespective of existing local protection mechanisms, unless intended
- With very high security, using global authentication and authorization databases
- With optimal usage of resources (LAN (Local Area Network) instead of WAN (Wide Area Network) access when possible, or even completely avoiding data copies where feasible)
- With a decoupling of authentication/authorization/logging (for instance on strategic sites) and serving the data (for instance close to the target databases and/or clients accessing the data)
- With appropriate logging
- Outperforming any centralized storage system, especially on distant sites

Optionally, full redundancy can be established. With an appropriate network topology, this might also decrease network latency times and thus increase performance, as even the calls to the search/authentication/authorization servers can happen in a local network.

A highly efficient build system can be established for areas which build data collections based on other released data referenced by their global information management system identities (for example, product and document identities).

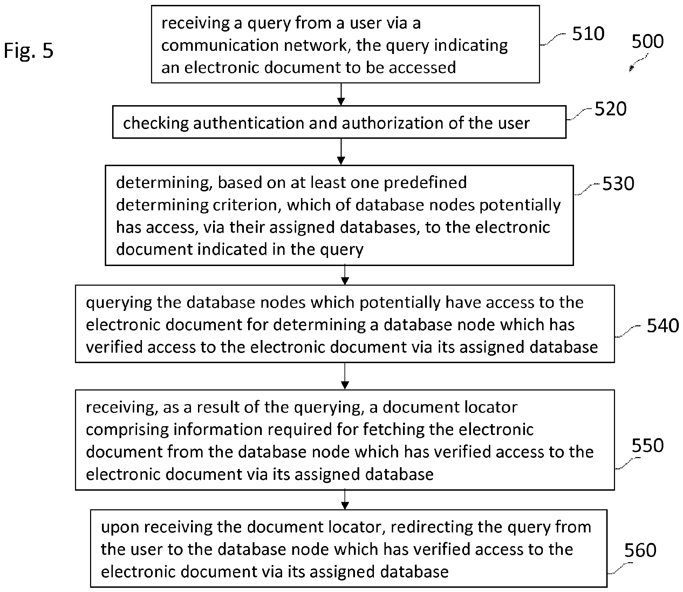

**Fig. 5** is a block diagram illustrating different procedures to be performed when executing a method 500 of accessing an electronic document located within a communication network such as the one shown in Fig. 1 to Fig. 3 including database nodes 180 having access to electronic documents according to an example of the invention.

In a block 510, a query is received from a user node 110 via the communication network. This query indicates a specific identified electronic document to be accessed. For example, a communication message is sent from the user node 110 to the control node 150 to indicate that the user wishes to get access to a defined electronic document. It is also possible that the access to a plurality of electronic documents is requested in such a query.

In a subsequent procedure 520, authentication and authorization of the user is checked, for instance in control node 150. For example, the control node 150 may get access, via an accessible user data database including a number of user identities for authentication and including a number of user roles for authorization. The control node 150 may then check whether the user relating to the user node 110 is in principle allowed to access electronic documents in view of his identity. The control node 150 may also check whether the user relating to the user node 110 has the authorization for accessing specific electronic documents. Thus, at an early stage of the procedure, it is possible to reject non-authorized requests. Additional authorization and data integrity checks may be applied at each subsequent step (not shown).

In a subsequent procedure 530, it may be determined, based on one or more predefined determining criteria, which of database nodes 180 potentially has access, via the assigned databases 190, to the electronic document indicated in the query. Such determining criteria may be databases 190 in which the electronic document has been originally stored, database nodes 180 which are configured to serve the user node 110, etc.

In a subsequent procedure 540, the database nodes 180 selected in procedure 530 to potentially have access to the electronic document are queried. As a result of this query, one or more database nodes 180 may be determined which have verified access to the electronic document via an assigned database 190. Thus, the list of potential candidates for accessing the electronic document may be further reduced by a communication with the corresponding database nodes 180 for determining which of them in fact has access to the desired document.

Therefore, in the two-stage procedure 530, 540, a large number of database nodes 180 may be quickly reduced to a very small number which can in fact provide access to the electronic document.

In a procedure 550, a document locator is received as a result of the querying. The document locator may comprise information required for fetching the desired electronic document via the database node 180 which has verified access to this electronic document via one of its assigned databases 190.

In a subsequent procedure 560, the query may be redirected to a communication path from the user node 110 to the database node 180 which has verified access to the electronic document via its assigned database 190, upon receiving the document locator. Thus, the user node 110 may be provided with the document locator so that the further communication for getting access to the electronic document can be performed directly between the requesting user node 110 and the database node 180 having access to this electronic document. Hence, by sending the document locator to the database node 180 (or directly to the database 190), the user node 110 may then in fact get access to the electronic document.

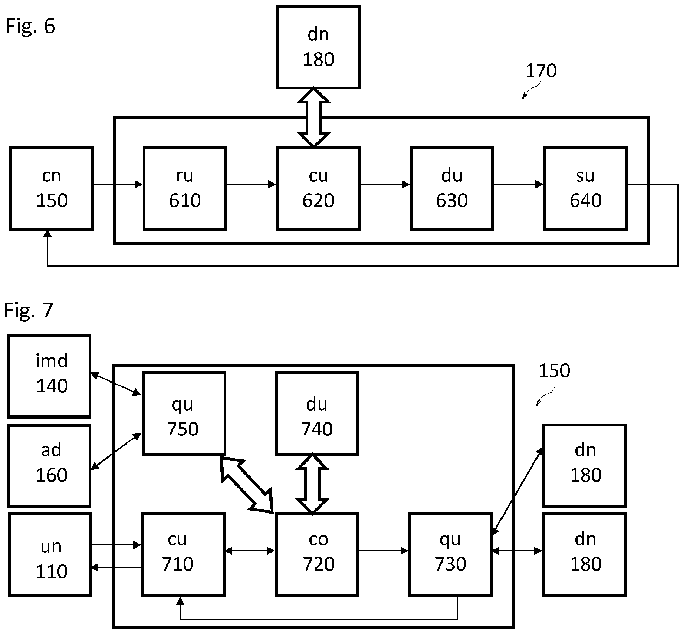

**Fig. 6** shows the internal constitution of a location broker node 170 as the one shown in Fig. 1 to Fig. 3.

The location broker node 170 is adapted for brokering access to electronic documents located within a communication network (such as the one shown in Fig. 1 to Fig. 3) including database nodes 180 having access to the electronic documents. As can be taken from Fig. 6, the location broker node 170 comprises a receiving unit 610 adapted for receiving a query from control node 150 via the communication network. The query indicates the electronic document to be accessed.

Furthermore, the location broker node 170 comprises a communication unit 620 which is adapted for communicating towards database nodes 180 (only one is shown in Fig. 6) for receiving information to be used for a subsequent determining procedure. The communication unit 620 may be optionally communicatively coupled to a caching unit (not shown). Such a cashing unit may have a memory for storing the received information and data computed from it for access by below described determining unit 630.

Such a determining can be performed by the determining unit 630 which is adapted for determining, based on a number of determination criteria, which of the database nodes 180 potentially have access to the electronic documents indicated in the query. Hence, the determining unit 630 generates a number of candidates among the database nodes 180 which could have access to the desired electronic document. It is also possible that the determining unit 630 already defines an order, for instance a priority list, according to which the database nodes 180 should be subsequently queried for rapidly finding a database node 180 which in fact has access to the desired electronic document.

Moreover, the location broker node 170 comprises a sending unit 640 which is adapted for sending a reply to the query of the control node 150. The reply indicates determined database nodes 180 which potentially have access to the electronic document.

Referring to **Fig. 7****,** the internal constitution of a control node 150 will be explained, which can be implemented in the systems shown in Fig. 1 to Fig. 3.

The control node 150 shown in Fig. 7 is adapted for controlling access to an electronic document located within the communication network (as the one shown in Fig. 1 to Fig. 3) including the database nodes 180 having access to the electronic documents.

The control node 150 comprises a communication unit 710 which is adapted for receiving a query from a user node 110 via the communication network, and for replying appropriately (with a document locator or error message or error document locator). The query indicates the electronic document to be accessed. Such a query may be sent, directly or indirectly, from the user client 110.

The control node also comprises a query unit 750 adapted for querying information management and authentication/authorization databases.

A computation unit 720 verifying user access (i.e. determining whether the requested document access is granted or whether access is rejected) is communicatively coupled to a determining unit 740 and is adapted for receiving from the determining unit 740 information indicating which of the database nodes 180 potentially have access to the electronic document indicated in the query, and also communicatively coupled to the query unit 750 querying the information management and authentication/authorization databases. Hence, computation unit 720 is adapted for receiving from the query unit 750 basic document access and user authentication/authorization data. In the example shown in Fig. 7, the determining unit 740 is part of the control node 150. However, in another example, particularly in an example in which the control node 150 interacts with the location broker node 170 of Fig. 6, the internal determining unit 740 can be substituted by external determining unit 630 of Fig. 6, i.e. by a determining unit 630 forming part of the location broker node 170 and not of the control node 150.

Moreover, a query unit 730 of the control node 150 is adapted for querying the determined database nodes 180 for determining a database node 180 having verified access to the electronic document. The query unit 730 may therefore be coupled to various database nodes 180. After having finished the query and after having determined a database node 180 having verified access to the electronic document, a corresponding document locator may be sent to the user node 110.

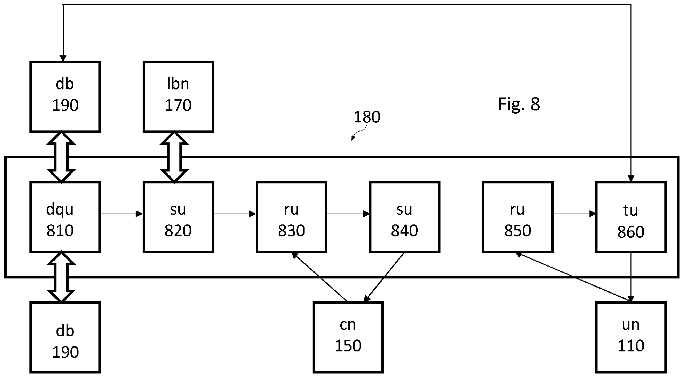

**Fig. 8** shows the internal constitution of a database node 180 which can be integrated in one of the systems shown in Fig. 1 to Fig. 3, and which may be adapted for interaction with a location broker node 170 shown in Fig. 6 and/or a control node 150 shown in Fig. 7.

The database node 180 is adapted for caching information of dynamically assigned distributed or replicated databases 190.

As can be taken from Fig. 8, the database node 180 comprises a database query unit 810 adapted for querying a set of (for instance dynamically) assigned databases 190 and for determining local network data for their identification and security data. The term "local network data for their identification and security data" may particularly denote any kind of data with regard to the communication network and the security of data transmission via the communication network which can be communicated from the database nodes 180 to the location broker node 170.

The database query unit 810 may be optionally communicatively coupled to a caching unit (not shown).

A sending unit 820 is adapted for communication of the above-mentioned cached local database and network information to a connected location broker node 170.

Furthermore, a receiving unit 830 is adapted for receiving a query from a control node 150 communicatively coupled with the above-mentioned database query unit 810, to check whether one of the assigned databases 190 contains the electronic document requested by the user node 110.

A further sending unit 840 is adapted for sending a reply to the query, wherein the reply indicates whether the document exists and is accessible via the database 190. Optionally, this reply may contain also a one-time usable document locator and/or other document metadata.

A further receiving unit 850 is adapted for receiving the one-time usable document locator, is communicatively coupled to an optional validity check unit (not shown, may check validity the one-time usable document locator) and a transmission unit 860, the latter reading the wanted document from its database 190 and delivering it (particularly in a secured manner) to the requesting user node 110.

The management of access to electronic documents described herein should be understood in a broad manner. For instance, from a version control point-of-view, fetch results may be reduced to a single version or revision, but technically not bound to this limitation. Specifically, a user query denoting a default revision (for example, the latest one) can be automatically concretized to a suitable set during the fetching process. The arrangements and methods presented in this description are suitable for integrating different version control models on both the information management (document handling) and document storage sides.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A method (500) of enabling access to an electronic document located within a communication network including database nodes (180) having access to electronic documents, wherein the method (500) comprises:
receiving (510) a query from a user (110) via the communication network, the query indicating the electronic document to be accessed;
determining (530), based on at least one predefined determination criterion depending on or based on a replication rate of databases storing corresponding electronic documents, which of the database nodes (180) potentially have access to the electronic document indicated in the query, wherein the at least one predefined determination criterion is used to determine a probability that a particular database node (180) has access to the electronic document indicated in the query; and
querying (540) the determined database nodes (180) for determining a database node (180) having verified access to the electronic document, wherein database nodes (180) with a higher probability are queried before database nodes (180) with a lower probability.

2. The method (500) according to claim 1, wherein distributed databases (190) are assigned to the database nodes (180) and store the electronic documents.

3. The method (500) according to claim 1 or 2,
wherein the determining (530) comprises generating a priority list in accordance with the determined probabilities, thereby ordering the determined database nodes (180) in accordance with a priority of accessing the electronic document via a respective one of the determined database nodes (180);
wherein the querying (540) is performed in an order in accordance with the order of the determined database nodes (180) in the priority list.

4. The method (500) according to claim 1 or any one of the above claims, wherein the method (500) comprises checking (520) at least one of an authentication and an authorization of the user (110) before querying the database nodes (180).

5. The method (500) according to claim 1 or any one of the above claims, wherein the method comprises receiving (550), as a result of the querying (540), a document locator comprising information required for obtaining the electronic document from the database node (180) which has verified access to the electronic document.

6. The method (500) according to claim 5, wherein the document locator is one of the group consisting of a one-time usable document locator, and a document locator allowing for accessing the electronic document only for a limited time.

7. The method (500) according to claim 5 or 6, wherein at least a part of the document locator is encrypted or cryptographically signed.

8. The method (500) according to any one of claims 5 to 7, wherein the method comprises, upon receiving the document locator, redirecting (560) the query from the user (110) to the database node (180) which has verified access to the electronic document.

9. The method (500) according to claim 1 or any one of the above claims, wherein the query from the user (110) comprises metadata related to the electronic document to be accessed.

10. A device for enabling access to an electronic document located within a communication network including database nodes (180) having access to electronic documents, wherein the device is configured to perform the steps of:
receiving (510) a query from a user (110) via the communication network, the query indicating the electronic document to be accessed;
determining (530), based on at least one predefined determination criterion depending on or based on a replication rate of databases storing corresponding electronic documents, which of the database nodes (180) potentially have access to the electronic document indicated in the query, wherein the at least one predefined determination criterion is used to determine a probability that a particular database node (180) has access to the electronic document indicated in the query; and
querying (540) the determined database nodes (180) for determining a database node (180) having verified access to the electronic document, wherein database nodes (180) with a higher probability are queried before database nodes (180) with a lower probability.

11. The device of claim 10, further configured to perform the steps of any one of the claims 2 to 9.

12. A program element of enabling access to an electronic document located within a communication network including database nodes (180) having access to electronic documents, which program element, when being executed by at least one processor (150, 170, 180), is adapted to control a method according to any one of the above claims 1 to 9.

## Patentansprüche

1. Verfahren (500) zum Ermöglichen des Zugangs zu einem elektronischen Dokument, das sich innerhalb eines Kommunikationsnetzes befindet, das Datenbankknoten (180) mit Zugang zu elektronischen Dokumenten beinhaltet, wobei das Verfahren (500) Folgendes umfasst:
Empfangen (510) einer Abfrage von einem Benutzer (110) über das Kommunikationsnetz, wobei die Abfrage das elektronische Dokument anzeigt, auf das zugegriffen werden soll;
Bestimmen (530), basierend auf mindestens einem vordefinierten Bestimmungskriterium in Abhängigkeit von oder basierend auf einer Replikationsrate von Datenbanken, die entsprechende elektronische Dokumente speichern, welcher der Datenbankknoten (180) möglicherweise Zugang zu dem in der Abfrage angegebenen elektronischen Dokument hat, wobei das mindestens eine vordefinierte Bestimmungskriterium verwendet wird, um eine Wahrscheinlichkeit zu bestimmen, dass ein bestimmter Datenbankknoten (180) Zugang zu dem in der Abfrage angegebenen elektronischen Dokument hat; und
Abfragen (540) der bestimmten Datenbankknoten (180) zum Bestimmen eines Datenbankknotens (180) mit verifiziertem Zugang zu dem elektronischen Dokument, wobei die Datenbankknoten (180) mit einer höheren Wahrscheinlichkeit vor den Datenbankknoten (180) mit einer niedrigeren Wahrscheinlichkeit abgefragt werden.

2. Verfahren (500) nach Anspruch 1, wobei die verteilten Datenbanken (190) den Datenbankknoten (180) zugeordnet sind und die elektronischen Dokumente speichern.

3. Verfahren (500) nach Anspruch 1 oder 2,
wobei das Bestimmen (530) das Erstellen einer Prioritätenliste gemäß den bestimmten Wahrscheinlichkeiten umfasst, wodurch die bestimmten Datenbankknoten (180) gemäß einer Priorität für den Zugang zu dem elektronischen Dokument über einen jeweiligen der bestimmten Datenbankknoten (180) angeordnet werden;
wobei das Abfragen (540) in einer Reihenfolge gemäß der Reihenfolge der bestimmten Datenbankknoten (180) in der Prioritätenliste durchgeführt wird.

4. Verfahren (500) nach Anspruch 1 oder einem der vorstehenden Ansprüche, wobei das Verfahren (500) das Überprüfen (520) mindestens eine von einer Authentifizierung und einer Autorisierung des Benutzers (110) vor dem Abfragen der Datenbancknoten (180) umfasst.

5. Verfahren (500) nach Anspruch 1 oder einem der vorstehenden Ansprüche, wobei das Verfahren das Empfangen (550) eines Dokumentenlokalisierers als Ergebnis der Abfrage (540) umfasst, der Informationen umfasst, die zum Erhalten des elektronischen Dokuments von dem Datenbankknoten (180) erforderlich sind, der den Zugang zu dem elektronischen Dokument überprüft hat.

6. Verfahren (500) nach Anspruch 5, wobei der Dokumentenlokalisierer einer ist aus der Gruppe bestehend aus einem einmalig verwendbaren Dokumentenlokalisierer und einem Dokumentenlokalisierer, der den Zugang zu dem elektronischen Dokument nur für eine begrenzte Zeit erlaubt.

7. Verfahren (500) nach Anspruch 5 oder 6, wobei mindestens ein Teil des Dokumentenlokalisierers verschlüsselt oder kryptographisch signiert ist.

8. Verfahren (500) nach einem der Ansprüche 5 bis 7, wobei das Verfahren nach dem Empfangen des Dokumentenlokalisierers das Umleiten (560) der Abfrage vom Benutzer (110) zu dem Datenbankknoten (180) umfasst, der den Zugang zu dem elektronischen Dokument überprüft hat.

9. Verfahren (500) nach Anspruch 1 oder einem der vorstehenden Ansprüche, wobei die Abfrage vom Benutzer (110) Metadaten umfasst, die sich auf das elektronische Dokument beziehen, auf das zugegriffen werden soll.

10. Vorrichtung zum Ermöglichen des Zugangs zu einem elektronischen Dokument, das sich innerhalb eines Kommunikationsnetzes befindet, das Datenbankknoten (180) mit Zugang zu elektronischen Dokumenten beinhaltet, wobei die Vorrichtung zum Ausführen der folgenden Schritte konfiguriert ist:
Empfangen (510) einer Abfrage von einem Benutzer (110) über das Kommunikationsnetz, wobei die Abfrage das elektronische Dokument anzeigt, auf das zugegriffen werden soll;
Bestimmen (530), basierend auf mindestens einem vordefinierten Bestimmungskriterium in Abhängigkeit von oder basierend auf einer Replikationsrate von Datenbanken, die entsprechende elektronische Dokumente speichern, welcher der Datenbankknoten (180) möglicherweise Zugang zu dem in der Abfrage angegebenen elektronischen Dokument hat, wobei das mindestens eine vordefinierte Bestimmungskriterium verwendet wird, um eine Wahrscheinlichkeit zu bestimmen, dass ein bestimmter Datenbankknoten (180) Zugang zu dem in der Abfrage angegebenen elektronischen Dokument hat; und
Abfragen (540) der bestimmten Datenbankknoten (180) zum Bestimmen eines Datenbankknotens (180) mit verifiziertem Zugang zu dem elektronischen Dokument, wobei die Datenbankknoten (180) mit einer höheren Wahrscheinlichkeit vor den Datenbankknoten (180) mit einer niedrigeren Wahrscheinlichkeit abgefragt werden.

11. Vorrichtung nach Anspruch 10, die ferner konfiguriert ist, um die Schritte nach einem der Ansprüche 2 bis 9 auszuführen.

12. Programmelement zum Ermöglichen des Zugangs zu einem elektronischen Dokument, das sich innerhalb eines Kommunikationsnetzes befindet, das Datenbankknoten (180) mit Zugang zu elektronischen Dokumenten beinhaltet, wobei das Programmelement, wenn es durch mindestens einen Prozessor (150, 170, 180) ausgeführt wird, zum Steuern eines Verfahrens nach einem der vorstehenden Ansprüche 1 bis 9 geeignet ist.

## Revendications

1. Procédé (500) pour permettre l'accès à un document électronique se trouvant au sein d'un réseau de communication incluant des noeuds de base de données (180) ayant accès à des documents électroniques, dans lequel le procédé (500) comprend :
la réception (510) d'une requête provenant d'un utilisateur (110) via le réseau de communication, la requête indiquant le document électronique auquel il faut accéder ;
le fait de déterminer (530), sur la base d'au moins un critère de détermination prédéfini dépendant de ou basé sur un taux de réplication de bases de données stockant des documents électroniques correspondants, quels noeuds de base de données (180) ont potentiellement accès au document électronique indiqué dans la requête, dans lequel l'au moins un critère de détermination prédéfini est utilisé pour déterminer une probabilité qu'un noeud de base de données particulier (180) ait accès au document électronique indiqué dans la requête ; et
l'interrogation (540) des noeuds de base de données déterminés (180) pour déterminer un noeud de base de données (180) ayant un accès vérifié au document électronique, dans lequel des noeuds de base de données (180) avec une probabilité plus élevée sont interrogés avant des noeuds de base de données (180) avec une probabilité plus basse.

2. Procédé (500) selon la revendication 1, dans lequel des bases de données réparties (190) sont attribuées aux noeuds de base de données (180) et stockent les documents électroniques.

3. Procédé (500) selon la revendication 1 ou 2,
dans lequel la détermination (530) comprend la génération d'une liste de priorités conformément aux probabilités déterminées, ce qui classe les noeuds de base de données déterminés (180) conformément à une priorité d'accès au document électronique via l'un respectif des noeuds de base de données déterminés (180) ; dans lequel l'interrogation (540) est mise en oeuvre dans un ordre conformément à l'ordre des noeuds de base de données déterminés (180) dans la liste de priorités.

4. Procédé (500) selon la revendication 1 ou l'une quelconque des revendications qui précèdent, dans lequel le procédé (500) comprend la vérification (520) d'au moins l'une parmi une authentification et une autorisation de l'utilisateur (110) avant interrogation des noeuds de base de données (180).

5. Procédé (500) selon la revendication 1 ou l'une quelconque des revendications qui précèdent, dans lequel le procédé comprend la réception (550), en conséquence de l'interrogation (540), d'un localisateur de document comprenant des informations requises pour obtenir le document électronique depuis le noeud de base de données (180) qui a un accès vérifié au document électronique.

6. Procédé (500) selon la revendication 5, dans lequel le localisateur de document est l'un parmi le groupe constitué d'un localisateur de document utilisable ponctuellement, et un localisateur de document permettant d'accéder au document électronique uniquement pendant un temps limité.

7. Procédé (500) selon la revendication 5 ou 6, dans lequel au moins une partie du localisateur de document est chiffrée ou signée de manière cryptographique.

8. Procédé (500) selon l'une quelconque des revendications 5 à 7, dans lequel le procédé comprend, à la réception du localisateur de document, le réacheminement (560) de la requête provenant de l'utilisateur (110) vers le noeud de base de données (180) qui a un accès vérifié au document électronique.

9. Procédé (500) selon la revendication 1 ou l'une quelconque des revendications qui précèdent, dans lequel la requête provenant de l'utilisateur (110) comprend des métadonnées se rapportant au document électronique auquel il faut accéder.

10. Dispositif pour permettre un accès à un document électronique se trouvant au sein d'un réseau de communication incluant des noeuds de base de données (180) ayant accès à des documents électroniques, dans lequel le dispositif est configuré pour mettre en oeuvre les étapes consistant à :
recevoir (510) une requête provenant d'un utilisateur (110) via le réseau de communication, la requête indiquant le document électronique auquel il faut accéder ;
déterminer (530), sur la base d'au moins un critère de détermination prédéfini dépendant de ou basé sur un taux de réplication de bases de données stockant des documents électroniques correspondants, quels noeuds de base de données (180) ont potentiellement accès au document électronique indiqué dans la requête, dans lequel l'au moins un critère de détermination prédéfini est utilisé pour déterminer une probabilité qu'un noeud de base de données particulier (180) ait accès au document électronique indiqué dans la requête ; et
interroger (540) les noeuds de base de données déterminés (180) pour déterminer un noeud de base de données (180) ayant un accès vérifié au document électronique, dans lequel des noeuds de base de données (180) avec une probabilité plus élevée sont interrogés avant des noeuds de base de données (180) avec une probabilité plus basse.

11. Dispositif selon la revendication 10, configuré en outre pour mettre en oeuvre les étapes de l'une quelconque des revendications 2 à 9.

12. Élément de programme pour permettre l'accès à un document électronique se trouvant au sein d'un réseau de communication incluant des noeuds de base de données (180) ayant accès à des documents électroniques, lequel élément de programme, lorsqu'il est exécuté par au moins un processeur (150, 170, 180), est conçu pour commander un procédé selon l'une quelconque des revendications précédentes 1 à 9.
